# EUROPÄISCHE PATENTANMELDUNG

(11) **EP 1 780 328 A1**
(43) Veröffentlichungstag der Anmeldung: **02.05.2007**
(21) Anmeldenummer: 05023346.9
(22) Anmeldetag: 26.10.2005
(51) Int. Cl.: D06F 93/00, A47G 25/14

(54) **Verfahren und Vorrichtung zur automatischen Identifizierung von Kleiderbügeln**

(71) Anmelder: TFS global hanger management GmbH, 48529 Nordhorn (DE)
(72) Erfinder: Bode, Hermann H., 48607 Ochtrup (DE)
(74) Vertreter: Ellberg, Nils

(57) **Zusammenfassung**

Die Erfindung betrifft ein Verfahren zur automatischen Identifizierung von Kleiderbügeln, wobei Kleiderbügel mit jeweils einer vorzugsweise im oberen Drittel des Kleiderbügelkorpus und/oder am Kleiderbügelhaltegriff angeordneten Identifizierungscodierung relativ zu einer Identifizierungseinrichtung bewegt werden, die die Identifizierungscodierung der Kleiderbügel ausliest, wobei die Identifizierungscodierung derart ausgebildet ist, dass anhand der Codierung jeder Kleiderbügel, insbesondere innerhalb einer Klasse von Kleiderbügeln gleicher Bauart, einzeln eineindeutig identifizierbar ist.

## Beschreibung

Die vorliegende Erfindung betrifft ein Verfahren zur automatischen Identifizierung von Kleiderbügeln. Sie betrifft weiter ein Verfahren und eine Vorrichtung zum automatischen Sortieren von Kleiderbügeln.

In der Bekleidungsindustrie werden Kleiderbügel im Rahmen logistischer Prozesse insbesondere für den Transport und die Präsentation von an den Kleiderbügeln aufgehängten Bekleidungsstücken eingesetzt. Ein derartiger logistischer Prozess kann beispielsweise schon bei der Herstellung der Kleidungsstücke beginnen, da dieselben zwischen einzelnen Fertigungsstufen üblicherweise auf Kleiderbügeln transportiert werden. Nach der Endfertigung werden die Kleidungsstücke mithilfe der Kleiderbügel beispielsweise zum Groß- und/oder Einzelhandel transportiert. Den Abschluss dieser Kette bildet häufig die Präsentation der Kleidung gegenüber den Kunden, beispielsweise in einem Einzelhandelsgeschäft.

Zu den genannten Zwecken werden verschiedene Bauarten bzw. Typen von Kleiderbügeln verwendet, die sich insbesondere in Größe, Farbe und Form unterscheiden können. Häufig werden sogenannte Einwegkleiderbügel eingesetzt, die aber aus Kosten- und Umweltgründen üblicherweise mehrfach verwendet werden. Erst dann, wenn die Kleiderbügel schadhaft sind, werden sie aus dem logistischen Prozess entfernt und der Entsorgung zugeführt.

Jeweils nach bestimmten temporären Einsätzen der Kleiderbügel, beispielsweise nach dem Abschluss einer Präsentation bestimmter Kleidungsstücke in einem Einzelhandelsgeschäft, werden die entsprechenden Bügel, sobald sie nicht mehr gebraucht werden, häufig ungeordnet in Aufbewahrungsbehältnissen gelagert. Üblicherweise werden mehrere verschiedene Arten von Kleiderbügeln verwendet, wobei die Lagerung der Kleiderbügel in den Behältnissen ungeordnet erfolgt, so dass anschließend ein Sortieren der Bügel in einzelne Gruppen notwendig ist. Das Sortieren der Bügel kann naturgemäß von Hand durchgeführt werden. Dies ist allerdings zeit- und kostenintensiv, so dass Verfahren sowie Vorrichtungen entwickelt wurden, um den Sortiervorgang zu automatisieren.

Aus der EP 0 861 129 B1 ist beispielsweise bekannt, Kleiderbügel vor dem eigentlichen Sortiervorgang an einer optischen Erkennungseinheit vorbeizuführen. Die optische Erkennungseinheit nimmt dabei Bilder von den zu erkennenden Kleiderbügeln auf und vergleicht diese mit gespeicherten Bildern von Referenzkleiderbügeln. Durch den Vergleich des jeweils von der Erkennungseinheit aufgenommenen Bildes mit den hinterlegten Referenzbildern ist es möglich, beispielsweise den Bügeltyp oder die Bügelfarbe zu bestimmen. Jeder Bildaufnahme- und Bilderkennungsvorgang dauert dabei mindestens ca. 300 Millisekunden. Für die Aufnahme jedes Bildes ist es notwendig, die Bügel möglichst exakt auszurichten und in eine vorgegebene Referenzposition zu bringen, in der die Bilder aufgenommen werden.

Nachteilig bei diesem Stand der Technik ist speziell, dass eine sehr genaue Positionierung der Kleiderbügel zur Aufnahme der Bilder notwendig ist. Darüber hinaus benötigt jeder einzelne Erkennungsvorgang aufgrund der aufwendigen Bildaufnahme- und Bildauswerteverfahren eine vergleichsweise lange Zeitdauer.

Ausgehend von diesem Stand der Technik ist insbesondere Aufgabe der vorliegenden Erfindung, ein Identifikationsverfahren, ein Sortierverfahren sowie eine Sortiervorrichtung zum Identifizieren bzw. Sortieren von Kleiderbügeln anzugeben, bei denen der Identifizierungsvorgang vergleichsweise schnell durchgeführt werden kann.

Diese Aufgabe wird gelöst durch die Ansprüche 1, 2 und 6.

Danach werden bei einem erfindungsgemäßen Verfahren zur automatischen Identifizierung von Kleiderbügeln die Kleiderbügel mit jeweils einer vorzugsweise im oberen Drittel des Kleiderbügelkorpus und/oder am Kleiderbügelhaltegriff, insbesondere am Kleiderbügelhaken, angeordneten Identifizierungscodierung relativ zu einer Identifizierungseinrichtung bewegt, die die Identifizierungscodierung der Kleiderbügel ausliest, wobei die Identifizierungscodierung derart ausgebildet ist, dass anhand der Codierung jeder Kleiderbügel, insbesondere innerhalb einer Klasse von Kleiderbügeln gleicher Bauart, einzeln eineindeutig identifizierbar ist.

Es weist also jeder Kleiderbügel eine eineindeutige Identifizierungscodierung auf, im einfachsten Fall eine Nummer, die die Identifizierungseinrichtung auslesen kann. Unter eineindeutig wird verstanden, dass jedem Kleiderbügel eine eigene, individuelle Nummer zugeordnet wird. Es sind demnach keine zwei Kleiderbügel, die mit dem erfindungsgemäßen Verfahren identifiziert werden sollen, mit gleichen Identifizierungscodierungen versehen. Erfindungsgemäß werden die Kleiderbügel eineindeutig identifiziert, während im Stand der Technik ausschließlich ermittelt werden kann, welcher Gruppe von Kleiderbügeln, beispielsweise welcher Kleiderbügelform, Farbe oder dergleichen, der jeweils identifizierte Kleiderbügel angehört.

Im Rahmen einer üblichen Umsetzung des erfindungsgemäßen Verfahrens werden die Kleiderbügel nacheinander relativ zu der ortsfesten Identifizierungseinrichtung bewegt. Denkbar ist alternativ allerdings auch, dass die Identifizierungseinrichtung relativ zu den ortsfesten Kleiderbügeln bewegt wird oder dass sich sowohl die Identifizierungseinrichtung als auch die zu identifizierenden Kleiderbügel bewegen.

Um in einer gegebenen Zeitspanne möglichst viele Kleiderbügel zu identifizieren, erfolgt der Auslesevorgang der Identifizierungscodierung des jeweils zu identifizierenden Kleiderbügels bevorzugt während sich dieser relativ zu der Identifizierungseinrichtung bewegt, insbesondere während die Kleiderbügel an der ortsfesten Identifizierungseinrichtung vorbeibewegt werden, ohne dass die Kleiderbügel für den Auslesevorgang abgestoppt werden. Alternativ ist allerdings genauso denkbar, den zu identifizierenden Kleiderbügel während des eigentlichen Auslesevorgangs der Codierung zu stoppen bzw. die Relativbewegung zwischen diesem Kleiderbügel und der Identifizierungseinrichtung anzuhalten.

Die Codierung ist mit dem Kleiderbügel vorzugsweise fest verbunden und bleibt diesem daher während seiner gesamten Einsatzdauer, d.h., während des gesamten Einsatzes in einer logistischen Prozesskette erhalten.

Zur Identifizierung der einzelnen Kleiderbügel ist es anders als im Stand der Technik nicht mehr zwingend notwendig, eine optische Erkennung des gesamten Bügels durchzuführen, um ein Gruppenmerkmal, wie etwa die Form des Bügels, ermitteln zu können. Vielmehr liest die Identifizierungseinrichtung ausschließlich die Codierung des Kleiderbügels aus. Nach Erfassung der Codierung des zu identifizierenden Kleiderbügels wird diese z.B. mittels einer geeigneten Software mit vorzugsweise in einer Datenbank, insbesondere in einer geeigneten Liste, hinterlegten Referenzcodierungen abgeglichen. In der Liste sind vorzugsweise sämtliche Codierungen von Kleiderbügeln enthalten, die zu irgendeinem Zeitpunkt in die logistische Prozesskette eingeführt wurden und demnach mit dem erfindungsgemäßen Identifizierungsverfahren erkannt werden können.

Stimmt die eineindeutige Codierung des zu identifizierenden Kleiderbügels mit einer in der Datenbank enthalten Codierung überein, ist die eineindeutige Identifizierung erfolgt. Zu jeder Identifizierungscodierung sind in der Datenbank besonders bevorzugt weitere Informationen über den identifizierten Bügel hinterlegt, d.h. der Identifizierungscodierung zugeordnet. Diese Informationen können relevante Gruppenmerkmale der Kleiderbügel sein, also Merkmale, die einer bestimmten Gruppe der Kleiderbügel gemeinsam sind und die dementsprechend für einen gegebenenfalls nachfolgenden Sortiervorgang relevant sein können. Derartige Gruppenmerkmale können den Bügeltyp betreffen, insbesondere die Bügelform, die Bügelgröße, oder die Bügelfarbe. Vorteilhafterweise können natürlich auch verschiedene weitere Informationen mit der Identifizierungscodierung verknüpft sein, beispielsweise Informationen betreffend das Herstellungsdatum des betreffenden Bügels. Aus einer derartigen Herstellungsinformation könnte beispielsweise abgeleitet werden, dass der betreffende Bügel eine vorbestimmte Maximaleinsatzzeit überschritten hat, sodass er nicht weiter verwendet wird und im Zuge eines nachfolgenden Sortiervorgangs automatisch aussortiert wird.

Bevorzugt um eine nachfolgende Sortierung der Kleiderbügel in Gruppen zu bewirken, können die identifizierten Kleiderbügel, insbesondere von der Identifizierungseinrichtung, im Anschluss an den Identifizierungsvorgang anhand von vorzugsweise in einer Datenbank hinterlegten, den einzelnen Codierungen zugeordneten Merkmalen der Kleiderbügel, zumindest zwei unterschiedlichen Gruppen mit jeweils wenigstens einem übereinstimmenden Merkmal zugewiesen werden.

Indem für die Identifizierung der einzelnen Kleiderbügel eine eineindeutige Identifizierungscodierung ausgelesen wird, benötigt jeder Identifizierungsvorgang im Vergleich zum Stand der Technik deutlich weniger Zeit, da zum einen keine umfassende Bilderkennung der einzelnen Bügel notwendig ist und zum anderen die aufwendigen Bildvergleiche mit Referenzbildern von Referenzkleiderbügeln entfallen, die üblicherweise mit einer rechenintensiven Bilderkennungssoftware durchgeführt werden. Je nach Art und Funktionsweise der die Identifizierung durchführenden Identifizierungseinrichtung ist erfindungsgemäß etwa nur noch eine Bilderkennung der einzelnen Codierung notwendig. Wenn der Auslesevorgang der Codierung über andere, vorzugsweise berührungslose Verfahren erfolgt, beispielsweise über Verfahren, die ohne Bilderkennung optische, akustische, elektromagnetische oder magnetische Signale zur Abtastung bzw. zum Auslesen der Codierung verwenden, kann eine Bilderkennung vollständig entfallen. Im Stand der Technik sind verschiedenste Verfahren bekannt oder denkbar, die ein insbesondere berührungsloses Abfragen bzw. Auslesen von Codierungen ermöglichen.

Die im Rahmen dieser Anmeldung beschriebene, automatische, eineindeutige Identifizierung von Kleiderbügeln kann darüber hinaus Informationen liefern, die im bisherigen Stand der Technik nicht ermittelbar waren, und die innerhalb von Warenströmen und Logistikketten vielfältig verwendbar sind.

Gemäß einem besonders wichtigen, eigenständigen Aspekt der vorliegenden Erfindung kann das Identifizierungsverfahren in ein Verfahren zur automatischen Sortierung von Kleiderbügeln integriert werden. Dabei werden die Kleiderbügel zunächst in der oben dargestellten Weise eineindeutig identifiziert und anschließend abhängig von der ausgelesenen Identifizierungscodierung mittels einer Kleiderbügelsortiervorrichtung physisch in zumindest zwei verschiedene Kleiderbügelgruppen sortiert. Sortiervorrichtungen, die dafür geeignet sind, sind im Stand der Technik bekannt, beispielsweise aus der EP 0 861 129 B1.

In einer besonderen Ausgestaltung des erfindungsgemäßen Verfahrens werden die identifizierten Kleiderbügel, wie oben angedeutet, insbesondere von der Identifizierungseinrichtung im Anschluss an den Identifizierungsvorgang anhand von vorzugsweise in einer Datenbank hinterlegten, den einzelnen Codierungen zugeordneten Merkmalen der Kleiderbügel in die zumindest zwei unterschiedlichen Gruppen mit jeweils wenigstens einem übereinstimmenden Merkmal eingeteilt. Entsprechend ihrer Zuordnung zu den einzelnen Gruppen mit jeweils wenigstens einem übereinstimmenden Merkmal können die Kleiderbügel dann mittels der Kleiderbügelsortiervorrichtung physisch in die Gruppen sortiert werden.

Wie der Fachmann des Standes der Technik erkennt, werden die einzelnen Verfahrensschritte teilweise mittels geeigneter Software und/oder mittels geeigneter Schaltungen umgesetzt.

Als eigenständiger Aspekt der Erfindung wird gemäß Anspruch 6 eine Vorrichtung zur Durchführung des erfindungsgemäßen Sortierverfahrens angegeben, die eine Fördereinrichtung aufweist zum Fördern von Kleiderbügeln entlang eines vorbestimmten Weges sowie eine Identifizierungseinrichtung zur automatischen und eineindeutigen Identifizierung der Kleiderbügel, wobei die Kleiderbügel von der Identifizierungseinrichtung anhand einer an den Kleiderbügeln angeordneten, eineindeutigen Identifizierungscodierung identifizierbar sind. Weitere Merkmale der entsprechenden Vorrichtung ergeben sich aus den beigefügten Ansprüchen.

Kleiderbügel, die in den erfindungsgemäßen Verfahren eingesetzt werden können, weisen einen Kleiderbügelkorpus auf und einen Kleiderbügelhaltegriff, insbesondere einen Kleiderbügelhaken, zum Aufhängen des Kleiderbügels an einer geeigneten Aufhängevorrichtung, wobei der Kleiderbügel die Identifizierungscodierung aufweist, über die der Kleiderbügel, insbesondere innerhalb einer Klasse von Kleiderbügeln gleicher Bauart, eineindeutig identifizierbar ist. Bevorzugt ist die Identifizierungscodierung am Haltegriff angeordnet. Grundsätzlich ist es zweckmäßig, die Identifizierungscodierung derart anzuordnen, dass sie auch dann sichtbar ist, wenn der Bügel mit einem Kleidungsstück behängt ist. Falls die Identifizierungscodierung am Kleiderbügelkorpus angeordnet wird, sollte dies vorteilhafterweise im oberen Drittel des Kleiderbügelkorpus geschehen. Alternativ kann sie allerdings auch weiter unten am Kleiderbügelkorpus angeordnet werden, insbesondere, wenn Lesemittel zum Auslesen der Codierung eingesetzt werden, die das Auslesen durch eventuell den Korpus verdeckende Kleidungsstücke hindurch ermöglicht. Die Identifizierungscodierung kann dabei beispielsweise eine unmittelbar auf den Kleiderbügel mittels eines Lasers und/oder Druckers aufgebrachte Codierung sein und/oder eine Codierung, die einer oder einem mit dem Kleiderbügel verbunden Plakette und/oder Etikett und/oder Transponder zugeordnet ist, insbesondere einem RFID-Transponder. Dabei ist die Identifizierungscodierung vorteilhafterweise ausschließlich auf einer Seite der Kleiderbügelcorpus und/oder des Haltegriffs angeordnet.

Weitere Merkmale und Aspekte der vorliegenden Erfindung ergeben sich aus den beigefügten Unteransprüchen sowie aus der nachfolgenden Beschreibung eines konkreten Ausführungsbeispiels der vorliegenden Erfindung.

Nachfolgend wird ein erfindungsgemäßer Verfahrensablauf in grober Form beschrieben, wenn eine vorgegebene Menge Kleiderbügel, die beispielsweise zwei verschiedene Gruppen von Kleiderbügeln enthält, nämlich Kleiderbügel der Form A sowie Kleiderbügel der Form B, automatisch sortiert werden:
Die ungeordnete Menge Kleiderbügel mit Kleiderbügeln A und B steht zu Beginn des Sortierverfahrens beispielsweise in einem Aufbewahrungsbehältnis zur Verfügung. Die Kleiderbügel werden entweder händisch und/oder mittels geeigneter Förderer in ungeordneter Form nacheinander einer Sortiervorrichtung zugeführt. Mittels beispielsweise Hängeförderern, die die Kleiderbügel in hängender Form transportieren, wird der Förderstrom aus zunächst ungeordneten Kleiderbügeln entlang eines vorbestimmten Förderweges transportiert. Für die genaue Ausbildung einer entsprechenden Sortiervorrichtung mit Mitteln zum Transportieren, Aussortieren sowie ggfs. Entnehmen von Kleiderbügeln aus dem Förderstrom sind verschiedenste Möglichkeiten bekannt und denkbar, sodass auf eine detaillierte Beschreibung verzichtet wird.

Erfindungsgemäß ist als Teil der Sortiervorrichtung eine Identifizierungseinrichtung vorgesehen, die entlang des Förderweges der ungeordneten Kleiderbügel positioniert wird. Die Identifizierungseinrichtung weist als Lesemittel einen optischen Scanner auf. Die Kleiderbügel, die nacheinander an dem Scanner vorbeibewegt werden, weisen jeweils eine durch den Scanner auslesbare, eineindeutige Identifizierungscodierung am Kleiderbügelhaken auf. Mittels des optischen Scanners wird die jeweilige Identifizierungscodierung der Kleiderbügel erfasst und gelesen, sobald diese an dem Scanner vorbeibewegt werden. Die Identifizierungseinrichtung überträgt die jeweils erfasste Codierung an einen Computer mit einer Identifizierungssoftware. Die Software gleicht jede übermittelte Codierung mit einer Datenbank ab, in der die Codierungen aller Kleiderbügel enthalten sind, die zu irgendeinem Zeitpunkt in den Logistikprozess eingeführt worden sind.

Nachdem beispielsweise die eineindeutige Codierung eines Kleiderbügels der Form A ausgelesen wurde, wird die entsprechende Codierung in der Datenbank gesucht. Im Anschluss eine erfolgreiche Identifizierung der Codierung in der Datenbank, kann die Software weitere, in der Datenbank zu der identifizierten Codierung abgelegte Informationen ermitteln, die zu dem identifizierten Kleiderbügel gehören, nämlich beispielsweise die Information, dass der identifizierte Kleiderbügel die Form A aufweist. In ähnlicher Weise werden Kleiderbügel der Form B erkannt.

Die jeweiligen Informationen, dass es sich bei den identifizierten Bügeln um Bügel der Form A bzw. B handelt, werden der Sortiervorrichtung zugeleitet, die daraufhin die jeweiligen Kleiderbügel in zwei Gruppen sortiert, nämlich in eine Gruppe Kleiderbügel mit der Form A und in eine Gruppe Kleiderbügel mit der Form B.

## Patentansprüche

1. Verfahren zur automatischen Identifizierung von Kleiderbügeln, **dadurch gekennzeichnet, dass** Kleiderbügel mit jeweils einer vorzugsweise im oberen Drittel des Kleiderbügelkorpus und/oder am Kleiderbügelhaltegriff, insbesondere Kleiderbügelhaken, angeordneten Identifizierungscodierung relativ zu einer Identifizierungseinrichtung bewegt werden, die die Identifizierungscodierung der Kleiderbügel ausliest, wobei die Identifizierungscodierung derart ausgebildet ist, dass anhand der Codierung jeder Kleiderbügel, insbesondere innerhalb einer Klasse von Kleiderbügeln gleicher Bauart, einzeln eineindeutig identifizierbar ist.

2. Verfahren zur automatischen Sortierung von Kleiderbügeln, **dadurch gekennzeichnet, dass** Kleiderbügel mit jeweils einer vorzugsweise im oberen Drittel des Kleiderbügelkorpus und/oder am Kleiderbügelhaltegriff, insbesondere Kleiderbügelhaken, angeordneten Identifizierungscodierung relativ zu einer Identifizierungseinrichtung bewegt werden, die die Identifizierungscodierung der Kleiderbügel ausliest, wobei die Identifizierungscodierung derart ausgebildet ist, dass anhand der Codierung jeder Kleiderbügel, insbesondere innerhalb einer Klasse von Kleiderbügeln gleicher Bauart, einzeln eineindeutig identifizierbar ist, wobei die Kleiderbügel abhängig von der ausgelesenen Identifizierungscodierung mittels einer Kleiderbügelsortiervorrichtung physisch in zumindest zwei verschiedene Kleiderbügelgruppen sortiert werden.

3. Verfahren gemäß Anspruch 1 oder 2, **dadurch gekennzeichnet, dass** die Kleiderbügel insbesondere von der Identifizierungseinrichtung anhand der Identifizierungscodierung automatisch identifiziert wird, indem die Codierung des zu identifizierenden Kleiderbügels mit vorzugsweise in einer Datenbank hinterlegten Codierungen von Kleiderbügeln abgeglichen wird.

4. Verfahren gemäß einem oder mehreren der vorhergehenden Ansprüche, **dadurch gekennzeichnet, dass** das Auslesen der Identifizierungscodierung des jeweils zu identifizierenden Kleiderbügels erfolgt, während sich dieser relativ zu der Identifizierungseinrichtung bewegt.

5. Verfahren gemäß einem oder mehreren der vorhergehenden Ansprüche, **dadurch gekennzeichnet, dass** die identifizierten Kleiderbügel, insbesondere von der Identifizierungseinrichtung, im Anschluss an den Identifizierungsvorgang anhand von vorzugsweise in einer Datenbank hinterlegten, den einzelnen Codierungen zugeordneten Merkmalen der Kleiderbügel zumindest zwei unterschiedlichen Gruppen zugewiesen werden, wobei die einzelnen Kleiderbügel jeder Gruppe zumindest ein allen Kleiderbügeln der Gruppe gemeinsames Merkmal aufweisen.

6. Verfahren gemäß Anspruch 5, **dadurch gekennzeichnet, dass** die Kleiderbügel entsprechend ihrer Zuordnung zu den unterschiedlichen Gruppen mit jeweils wenigstens einem übereinstimmenden Merkmal, mittels einer Kleiderbügelsortiervorrichtung physisch in die unterschiedlichen Gruppen sortiert werden.

7. Verfahren gemäß einem oder mehreren der vorhergehenden Ansprüche, **dadurch gekennzeichnet, dass** die Identifizierungseinrichtung die Identifizierungscodierung jedes Kleiderbügels jeweils berührungslos ausliest.

8. Vorrichtung zur Durchführung eines Sortierungsverfahrens zum automatischen Sortieren von Kleiderbügeln gemäß einem der vorhergehenden Ansprüche 2 - 7, mit einer Fördereinrichtung zum Fördern von Kleiderbügeln entlang eines vorbestimmten Weges und mit einer Identifizierungseinrichtung zur automatischen und eineindeutigen Identifizierung der Kleiderbügel, wobei die Kleiderbügel von der Identifizierungseinrichtung anhand einer an den Kleiderbügeln angeordneten, eineindeutigen Identifizierungscodierung identifizierbar sind.

9. Vorrichtung gemäß Anspruch 8, **dadurch gekennzeichnet, dass** die Identifizierungseinrichtung optische, elektromagnetische, akustische und/oder magnetische Lesemittel aufweist, mittels derer die Identifizierungscodierungen der Kleiderbügel vorzugsweise berührungslos auslesbar sind.

10. Vorrichtung gemäß Anspruch 8 oder 9, **dadurch gekennzeichnet, dass** die Identifizierungseinrichtung entlang der Förderweges der Kleiderbügel angeordnet ist.

11. Vorrichtung gemäß einem oder mehreren der vorhergehenden Ansprüche, **dadurch gekennzeichnet, dass** eine Sortiervorrichtung vorgesehen ist, die die Kleiderbügel anhand der Identifizierungscodierung physisch zumindest in zwei Gruppen sortiert.

12. Kleiderbügel mit einem Kleiderbügelkorpus und einem Kleiderbügelhaltegriff, insbesondere Kleiderbügelhaken, zum Aufhängen des Kleiderbügels an einer geeigneten Aufhängevorrichtung, **dadurch gekennzeichnet, dass** am Haltegriff und/oder im oberen Drittel des Kleiderbügelkorpus eine Identifizierungscodierung angeordnet ist, über die der Kleiderbügel, insbesondere innerhalb einer Klasse von Kleiderbügeln gleicher Bauart, eineindeutig identifizierbar ist.

13. Kleiderbügel gemäß Anspruch 12, **dadurch gekennzeichnet, dass** die ldentifizierungscodierung eine unmittelbar auf dem Kleiderbügel mittels eines Lasers und/oder Druckers aufgebrachte Codierung ist und/oder eine Codierung, die einer oder einem mit dem Kleiderbügel verbundenen Plakette und/oder Etikett und/oder Transponder zugeordnet ist, insbesondere einem RFID-Transponder.

14. Kleiderbügel gemäß Anspruch 12 oder 13, **dadurch gekennzeichnet, dass** die Identifizierungscodierung ausschließlich auf einer Seite des Kleiderbügelkorpus und/oder des Haltegriffs angeordnet ist.
